# EUROPEAN PATENT APPLICATION

(11) **EP 4 546 848 A1**
(43) Date of publication of application: **30.04.2025**
(21) Application number: 22947289.9
(22) Date of filing: 22.06.2022
(51) Int. Cl.: H04W 24/02, H04W 28/02

(54) **AIR INTERFACE PROCESSING METHOD AND APPARATUS, AND STORAGE MEDIUM**

(71) Applicant: Beijing Xiaomi Mobile Software Co., Ltd., Beijing 100085 (CN)
(72) Inventor: HONG, Wei, Beijing 100085 (CN)
(74) Representative: Dehns Germany Partnerschaft mbB
(86) International application number: PCT/CN2022/100537
(87) International publication number: WO 2023/245512

(57) **Abstract**

An air interface processing method and apparatus (900, 1000), and a storage medium. The air interface processing method comprises: in response to it being determined that a terminal chooses to perform air interface processing on the basis of an artificial intelligence (AI) mode, reporting a notification message to a base station (101, 201, 301), wherein the notification message is used for notifying the base station that the terminal chooses to perform air interface processing on the basis of the AI mode. AI is integrated with a communication network, such that the air interface processing efficiency and the communication quality are improved using the AI processing capability of a terminal side. Moreover, when air interface processing based on an AI mode cannot meet an air interface processing requirement, a terminal is controlled to fall back to a non-AI mode for air interface processing, thereby improving the flexibility of switching air interface processing modes.

## Description

### TECHNICAL FIELD

The present disclosure relates to a field of communication, and in particular, to air interface processing methods and apparatuses, and storage mediums.

### BACKGROUND

With development of wireless communication technologies and computer technologies, application of artificial intelligence (AI) in intelligent terminals is becoming increasingly important. AI applications may improve using experience of users in various fields, such as photographing, voice, security, etc., of the intelligent terminals. With maturity and commercialization of 5th generation mobile networks (5G) technologies, the 5G network has significant characteristics, such as high rate, high reliability, low latency, etc., so that AI on a side of the terminal has an opportunity to perform an intelligent coordination with AI on a side of a cloud, to implement more functions and bring better experience to users. Specifically, they will be embodied as follows.

The AI on the side of the terminal may quickly respond to user requirements, quickly display processed images, videos, voices, and text information to a user in a low-power and low-cost manner, and is suitable for completing AI reasoning tasks.

The AI on the side of the cloud implements multi-terminal data aggregation, has more advantages in aspects, such as data throughput, processing speed, etc., and is suitable for completing AI model training tasks. Therefore, an artificial intelligence processing model for terminal-cloud coordination will play an important role in model training, data reasoning, etc.

After a command sent by the user is preliminarily processed by an intelligent chip on the side of the terminal, the side of the terminal interacts real-time with a device on the side of the cloud through the 5G network, and then feeds back a processing result on the side of the terminal to the user through the 5G network, which may improve a data processing capability and effectively reduce a time delay.

At present, the AI on the side of the terminal is still in a primary development stage, but with arrival of the 5G era, in the future, the application of the AI in the intelligent terminals will realize more seamless cloud-terminal coordination, more natural interaction manners, and better interconnection and coordination between the intelligent terminals.

However, with increasing processing capacities of terminals, a side of a terminal with an AI capability may process more and more data and make quick feedback and decisions. However, the base station cannot determine the AI capability of the terminal, and therefore cannot use the AI capability of the terminal.

### SUMMARY

Embodiments of the present disclosure provide air interface processing methods and apparatuses, and storage mediums, to overcome problems existing in related technologies.

According to a first aspect of embodiments of the present disclosure, an air interface processing method is provided. The method is performed by a terminal and includes:
reporting, in response to determining that the terminal performs air interface processing based on an artificial intelligence (AI) manner, a notification message to a base station, where the notification message is for notifying the base station that the terminal performs the air interface processing based on the AI manner.

Optionally, the reporting notification message to the base station, includes any one of:
reporting the notification information to the base station with first radio resource control (RRC) signaling; or
reporting the notification information to the base station with a first medium access control element (MAC CE).

Optionally, the method further includes:
receiving a backoff configuration instruction sent by the base station when determining that the terminal meets a backoff condition, where the backoff condition indicates a condition for the terminal performing air interface processing manner backoff, and the backoff configuration instruction is for instructing the terminal to perform the air interface processing manner backoff; and
backing off, based on the backoff configuration instruction, to a non-AI manner to perform the air interface processing.

Optionally, the receiving a backoff configuration instruction sent by the base station when determining that the terminal meets a backoff condition, includes any one of:
receiving the backoff configuration instruction sent by the base station with second RRC signaling when determining that the terminal meets the backoff condition; or
receiving the backoff configuration instruction sent by the base station with a second MAC CE when determining that the terminal meets the backoff condition.

Optionally, the method further includes:
receiving configuration information sent by the base station for configuring a backoff condition, where the backoff condition indicates a condition for the terminal performing air interface processing manner backoff; and
backing off, in response to determining that the terminal performs the air interface processing based on the AI manner and meets the backoff condition, to a non-AI manner to perform the air interface processing; and/or
performing, in response to determining that the terminal performs the air interface processing based on the AI manner and does not meet the backoff condition, the air interface processing based on the AI manner.

Optionally, the receiving configuration information sent by the base station for configuring a backoff condition, includes any one of:
receiving the configuration information sent by the base station with third RRC signaling; or
receiving the configuration information sent by the base station with a third MAC CE.

Optionally, different air interface processing behaviours performed by the terminal based on the AI manner correspond to different backoff conditions.

Optionally, the backoff condition includes at least one of:
performance parameter values, which indicate a performance of the terminal when performing different air interface processing behaviours based on the AI manner, are less than one or more preset thresholds; or
a duration, in which the performance parameter value is less than the preset threshold, reaches a preset duration.

Optionally, the different air interface processing behaviours performed by the terminal based on the AI manner correspond to different preset thresholds.

Optionally, the different air interface processing behaviours performed by the terminal based on the AI manner correspond to different performance parameters.

Optionally, the performance parameters include any one of:
an accuracy parameter; or
a bit error rate parameter.

Optionally, the air interface processing includes at least one of:
channel state information (CSI) feedback; or
beam management.

According to a second aspect of embodiments of the present disclosure, an air interface processing method is provided. The method is performed by a base station and includes:
receiving a notification message reported by a terminal, where the notification message is for notifying the base station that the terminal performs air interface processing based on an artificial intelligence (AI) manner.

Optionally, the receiving a notification message reported by a terminal, includes any one of:
receiving the notification information reported by the terminal to the base station with first radio resource control (RRC) signaling; or
receiving the notification information reported by the terminal to the base station with a first medium access control element (MAC CE).

Optionally, the method further includes:
sending, in response to determining that the terminal meets a backoff condition, a backoff configuration instruction to the terminal, where the backoff condition indicates a condition for the terminal performing air interface processing manner backoff, and the backoff configuration instruction is for instructing the terminal to perform the air interface processing manner backoff.

Optionally, the sending a backoff configuration instruction to the terminal, includes any one of:
sending the backoff configuration instruction to the terminal with second RRC signaling; or
sending the backoff configuration instruction to the terminal with a second MAC CE.

Optionally, the method further includes:
sending configuration information to the terminal for configuring a backoff condition, where the backoff condition indicates a condition for the terminal performing air interface processing manner backoff.

Optionally, the sending configuration information to the terminal for configuring a backoff condition, includes any one of:
sending the configuration information to the terminal with third RRC signaling; or
sending the configuration information to the terminal with a third MAC CE.

Optionally, different air interface processing behaviours performed by the terminal based on the AI manner correspond to different backoff conditions.

Optionally, the backoff condition includes at least one of:
performance parameter values, which indicate a performance of the terminal when performing different air interface processing behaviours based on the AI manner, are less than one or more preset thresholds; or
a duration, in which the performance parameter value is less than the preset threshold, reaches a preset duration.

Optionally, the different air interface processing behaviours performed by the terminal based on the AI manner correspond to different preset thresholds.

Optionally, the different air interface processing behaviours performed by the terminal based on the AI manner correspond to different performance parameters.

Optionally, the performance parameters include any one of:
an accuracy parameter; or
a bit error rate parameter.

Optionally, the air interface processing includes at least one of:
channel state information (CSI) feedback; or
beam management.

According to a third aspect of embodiments of the present disclosure, an air interface processing apparatus is provided. The apparatus is applied to a terminal and includes:
a reporting module, configured to report, in response to determining that the terminal performs air interface processing based on an artificial intelligence (AI) manner, a notification message to a base station, where the notification message is for notifying the base station that the terminal performs the air interface processing based on the AI manner.

According to a fourth aspect of embodiments of the present disclosure, an air interface processing apparatus is provided. The apparatus is applied to a base station and includes:
a receiving module, configured to receive a notification message reported by a terminal, where the notification message is for notifying the base station that the terminal performs air interface processing based on an artificial intelligence (AI) manner.

According to a fifth aspect of embodiments of the present disclosure, a computer-readable storage medium is provided. The computer-readable storage medium stores a computer program, and the computer program is configured to perform any one air interface processing method in the first aspect.

According to a sixth aspect of embodiments of the present disclosure, a computer-readable storage medium is provided. The computer-readable storage medium stores a computer program, and the computer program is configured to perform any one air interface processing method in the second aspect.

According to a seventh aspect of embodiments of the present disclosure, an air interface processing apparatus is provided. The apparatus includes:
a processor; and
a memory, storing instructions executable by the processor;
where the processor is configured to perform any one air interface processing method in the first aspect.

According to an eighth aspect of embodiments of the present disclosure, an air interface processing apparatus is provided. The apparatus includes:
a processor; and
a memory, storing instructions executable by the processor;
where the processor is configured to perform any one air interface processing method in the second aspect.

Technical solutions provided by the embodiments of the present disclosure may include the following beneficial effects.

In the embodiments of the present disclosure, the terminal may report a notification message to the base station, where the notification message is for notifying the base station that the terminal performs air interface processing based on the AI manner, which facilitates the base station to determine the air interface processing manner of the terminal. In the present disclosure, the AI may be integrated with the communication network, the air interface processing efficiency and the communication quality are improved by using the AI processing capability on the side of the terminal, and the terminal is controlled to back off to the non-AI manner to perform the air interface processing in the case that the air interface processing based on the AI manner cannot meet the air interface processing requirement, which improves the flexibility of switching air interface processing manners.

It should be understood that the above general description and the detailed description in the following text are only exemplary and explanatory, and cannot limit the present disclosure.

### BRIEF DESCRIPTION OF DRAWINGS

The accompanying drawings here are incorporated into the specification and form a part of this specification, show embodiments conforming to the present disclosure and are used together with the specification to explain principles of the present disclosure.
FIG. 1 is a schematic flowchart of an air interface processing method shown according to an exemplary embodiment.
FIG. 2 is a schematic flowchart of another air interface processing method shown according to an exemplary embodiment.
FIG. 3 is a schematic flowchart of another air interface processing method shown according to an exemplary embodiment.
FIG. 4 is a schematic flowchart of another air interface processing method shown according to an exemplary embodiment.
FIG. 5 is a schematic flowchart of another air interface processing method shown according to an exemplary embodiment.
FIG. 6 is a schematic flowchart of another air interface processing method shown according to an exemplary embodiment.
FIG. 7 is a block diagram of an air interface processing apparatus shown according to an exemplary embodiment.
FIG. 8 is a block diagram of another air interface processing apparatus shown according to an exemplary embodiment.
FIG. 9 is a schematic structural diagram of an air interface processing apparatus shown according to an exemplary embodiment of the present disclosure.
FIG. 10 is a schematic structural diagram of another air interface processing apparatus shown according to an exemplary embodiment of the present disclosure.

### DETAILED DESCRIPTION

Exemplary embodiments will be described in details herein, with examples thereof represented in the accompanying drawings. When the following description involves the accompanying drawings, same numerals in different figures represent same or similar elements unless otherwise indicated. Implementations described in the following exemplary embodiments do not represent all implementations consistent with the present disclosure. Rather, they are merely examples of apparatuses and methods consistent with some aspects of the present disclosure as detailed in the appended claims.

Terms used in the present disclosure are only for a purpose of describing specific embodiments, and are not intended to limit the present disclosure. Singular forms, "a/an," "the," and "this," used in the present disclosure and the appended claims are also intended to include majority forms, unless the context clearly indicates other meanings. It should also be understood that the term "and/or" used herein refers to and includes any or all possible combinations of at least one related listed item.

It should be understood that although terms, such as "first," "second," "third," etc., may be used in the present disclosure to describe various information, such information should not be limited by these terms. These terms are only used to distinguish a same type of information from each other. For example, without departing from the scope of the present disclosure, first information may also be referred to as second information, and similarly, the second information may also be referred to as the first information. Depending on the context, the term "if" used herein may be interpreted as "when," "while," or "in response to determining."

The air interface processing method, on the side of the terminal, provided in the present disclosure is described first below.

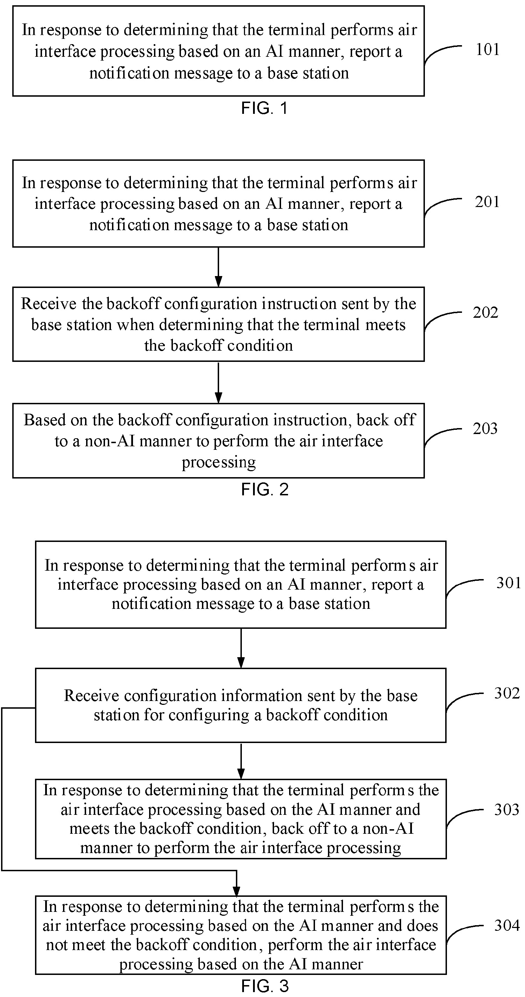

An embodiment of the present disclosure provides an air interface processing method. Referring to FIG. 1, FIG. 1 is a flowchart of an air interface processing method shown according to an embodiment. The method may be performed by a terminal. The method may include the following step 101.

At step 101, in response to determining that the terminal performs air interface processing based on an AI manner, a notification message is reported to a base station.

In an embodiment of the present disclosure, the notification message is for notifying the base station that the terminal performs air interface processing based on the AI manner.

In a possible implementation, the terminal may report the notification message to the base station with first radio resource control (RRC) signaling.

The first RRC signaling may multiplex RRC signaling in a related protocol, or the first RRC signaling is dedicated RRC signaling for reporting the notification message, which is not limited in the present disclosure.

In another possible implementation, the terminal may report the notification message to the base station with a first medium access control element (MAC CE).

The first MAC CE may be a dedicated MAC CE for reporting the notification message.

In a possible implementation, the air interface processing includes but is not limited to at least one of: channel state information (CSI) feedback or beam management.

In the above embodiment, the terminal may report a notification message to the base station, where the notification message is for notifying the base station that the terminal performs air interface processing based on the AI manner, which facilitates the base station to determine the air interface processing manner of the terminal, is easy to implement, and has high availability.

In some optional embodiments, referring to FIG. 2, FIG. 2 is a flowchart of an air interface processing method shown according to an embodiment. The method may be performed by a terminal. The method may include the following steps 201-203.

At step 201, in response to determining that the terminal performs air interface processing based on an AI manner, a notification message is reported to a base station.

In an embodiment of the present disclosure, the notification message is for notifying the base station that the terminal performs air interface processing based on the AI manner.

In a possible implementation, the terminal may report the notification message to the base station with first RRC signaling.

The first RRC signaling may multiplex RRC signaling in a related protocol, or the first RRC signaling is dedicated RRC signaling for reporting the notification message, which is not limited in the present disclosure.

In another possible implementation, the terminal may report the notification message to the base station with a first MAC CE.

The first MAC CE may be a dedicated MAC CE for reporting the notification message.

In a possible implementation, the air interface processing includes but is not limited to at least one of: CSI feedback or beam management.

At step 202, the backoff configuration instruction sent by the base station when determining that the terminal meets the backoff condition is received.

In the embodiment of the present disclosure, the backoff condition indicates a condition for the terminal performing air interface processing manner backoff, and the backoff configuration instruction is for instructing the terminal to perform the air interface processing manner backoff.

In a possible implementation, the base station may send the backoff configuration instruction to the terminal with second RRC signaling.

The second RRC signaling may multiplex RRC signaling in a related protocol, or the second RRC signaling is dedicated RRC signaling for sending the backoff configuration instruction, which is not limited in the present disclosure.

In another possible implementation, the base station may send the backoff configuration instruction to the terminal with a second MAC CE.

The second MAC CE may be a dedicated MAC CE for sending the backoff configuration instruction.

At step 203, based on the backoff configuration instruction, a non-AI manner is backed off to, to perform the air interface processing.

In the embodiment of the present disclosure, the non-AI manner may be an air interface processing manner, not related to the AI manner, agreed by a protocol in the related technology.

In the embodiment of the present disclosure, the base station may detect whether the terminal meets the backoff condition, and if the base station determines that the terminal meets the backoff condition, the base station sends a backoff configuration instruction to the terminal, and the terminal receives the backoff configuration instruction, and directly backs off to the non-AI manner to perform the air interface processing based on the backoff configuration instruction. If the terminal does not receive the backoff configuration instruction, the terminal may continue to perform the air interface processing based on the AI manner.

In the above embodiment, the terminal may back off to the non-AI manner to perform the air interface processing based on the backoff configuration instruction sent by the base station, which improves flexibility of switching air interface processing manners.

In some optional embodiments, referring to FIG. 3, FIG. 3 is a flowchart of an air interface processing method shown according to an embodiment. The method may be performed by a terminal. The method may include the following steps 301-304.

At step 301, in response to determining that the terminal performs air interface processing based on an AI manner, a notification message is reported to a base station.

In an embodiment of the present disclosure, the notification message is for notifying the base station that the terminal performs air interface processing based on the AI manner.

In a possible implementation, the terminal may report the notification message to the base station with first RRC signaling.

The first RRC signaling may multiplex RRC signaling in a related protocol, or the first RRC signaling is dedicated RRC signaling for reporting the notification message, which is not limited in the present disclosure.

In another possible implementation, the terminal may report the notification message to the base station with a first MAC CE.

The first MAC CE may be a dedicated MAC CE for reporting the notification message.

In a possible implementation, the air interface processing includes but is not limited to at least one of: CSI feedback or beam management.

At step 302, configuration information sent by the base station is received for configuring a backoff condition.

In an embodiment of the present disclosure, the backoff condition indicates a condition for the terminal performing air interface processing manner backoff.

In a possible implementation, the base station may send the configuration information to the terminal with third RRC signaling.

The third RRC signaling may multiplex RRC signaling in a related protocol, or the third RRC signaling is dedicated RRC signaling for sending the configuration information, which is not limited in the present disclosure.

In another possible implementation, the base station may send the configuration information to the terminal with a third MAC CE.

The third MAC CE may be a dedicated MAC CE for sending the configuration information.

At step 303, in response to determining that the terminal performs the air interface processing based on the AI manner and meets the backoff condition, a non-AI manner is backed off to, to perform the air interface processing.

In the embodiment of the present disclosure, the terminal receives the configuration information in the case that the terminal performs the air interface processing based on the AI manner. In this case, the terminal first detects whether the backoff condition is met, and if the backoff condition is met, the terminal backs off to the non-AI manner to perform the air interface processing.

Alternatively, the terminal receives the configuration information in the case that the terminal is performing the air interface processing based on the AI manner. Before the terminal is to subsequently perform the air interface processing based on the AI manner, the terminal first detects whether the backoff condition is met, and if the backoff condition is met, the terminal backs off to the non-AI manner to perform the air interface processing.

The non-AI manner may be an air interface processing manner, not related to the AI manner, agreed by a protocol in the related technology.

At step 304, in response to determining that the terminal performs the air interface processing based on the AI manner and does not meet the backoff condition, the air interface processing is performed based on the AI manner.

In the embodiment of the present disclosure, the terminal receives the configuration information in the case that the terminal performs the air interface processing based on the AI manner. In this case, the terminal first detects whether the backoff condition is met, and if the backoff condition is met, the terminal still performs the air interface processing based on the AI manner.

Alternatively, the terminal receives the configuration information in the case that the terminal is performing the air interface processing based on the AI manner. Before the terminal is to subsequently perform the air interface processing based on the AI manner, the terminal first detects whether the backoff condition is met, and if the backoff condition is met, the terminal still performs the air interface processing based on the AI manner.

In the above embodiment, the base station does not need to detect whether the terminal meets the backoff condition, but sends the backoff condition to the terminal with the configuration information, and the terminal detects whether the terminal meets the backoff condition, to determine whether to back off to the non-AI manner to perform the air interface processing, which improves the flexibility of switching the air interface processing manners.

In some optional embodiments, different air interface processing behaviours performed by the terminal based on the AI manner may correspond to different backoff conditions.

For example, CSI feedback performed by the terminal based on the AI manner corresponds to a first backoff condition, beam management performed by the terminal based on the AI manner corresponds to a second backoff condition, and the first backoff condition may be different from the second backoff condition.

In a possible implementation, the backoff condition may be at least one of:
performance parameter values, which indicate a performance of the terminal when performing different air interface processing behaviours based on the AI manner, are less than one or more preset thresholds; or
a duration, in which the performance parameter value is less than the preset threshold, reaches a preset duration.

In a possible implementation, different air interface processing behaviours performed by the terminal based on the AI manner may also correspond to different preset thresholds.

For example, the CSI feedback performed by the terminal based on the AI manner corresponds to a first preset threshold, and the beam management performed by the terminal based on the AI manner corresponds to a second preset threshold. The first preset threshold is different from the second preset threshold.

In a possible implementation, different air interface processing behaviours performed by the terminal based on the AI manner correspond to different performance parameters. The performance parameters may be any one of: an accuracy parameter or a bit error rate parameter.

For example, a performance parameter corresponding to the CSI feedback performed by the terminal based on the AI manner is the accuracy parameter, a performance parameter corresponding to the beam management performed by the terminal based on the AI manner is the bit error rate parameter, and vice versa.

The performance parameter may also be another parameter capable of indicating performance of the terminal performing the air interface processing behaviour based on the AI manner, which is not limited in the present disclosure.

Certainly, different air interface processing behaviours performed by the terminal based on the AI manner may also correspond to the same performance parameter, which is not limited in the present disclosure. For example, performance parameters corresponding to the CSI feedback and beam management performed by the terminal based on the AI manner are the accuracy parameter.

In another possible implementation, when different air interface processing behaviours performed by the terminal based on the AI manner correspond to the same performance parameter, the first preset threshold may also be the same as the second preset threshold, which is not limited in the present disclosure.

For example, performance parameters corresponding to the CSI feedback and beam management performed by the terminal based on the AI manner are the accuracy parameter, and preset thresholds corresponding to the both are the same.

The air interface processing method, on the side of a base station, provided in the present disclosure is described again below.

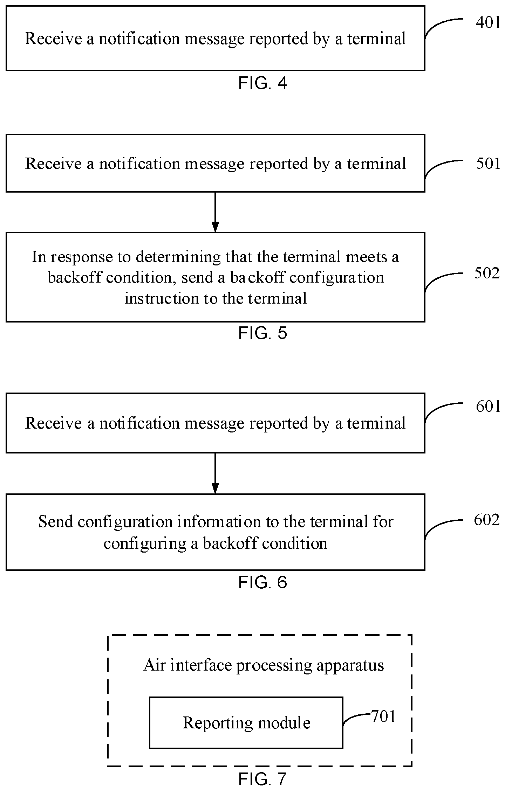

An embodiment of the present disclosure provides an air interface processing method. Referring to FIG. 4, FIG. 4 is a flowchart of an air interface processing method shown according to an embodiment. The method may be performed by a base station. The method may include the following step 401.

At step 401, a notification message reported by a terminal is received.

In an embodiment of the present disclosure, the notification message is for notifying the base station that the terminal performs air interface processing based on the AI manner.

In a possible implementation, the terminal may report the notification message to the base station with first RRC signaling.

The first RRC signaling may multiplex RRC signaling in a related protocol, or the first RRC signaling is dedicated RRC signaling for reporting the notification message, which is not limited in the present disclosure.

In another possible implementation, the terminal may report the notification message to the base station with a first MAC CE.

The first MAC CE may be a dedicated MAC CE for reporting the notification message.

In a possible implementation, the air interface processing includes but is not limited to at least one of: CSI feedback or beam management.

In the above embodiment, the base station may receive a notification message reported by the terminal, where the notification message is for notifying the base station that the terminal performs air interface processing based on the AI manner, which facilitates the base station to determine the air interface processing manner of the terminal, is easy to implement, and has high availability.

In some optional embodiments, referring to FIG. 5, FIG. 5 is a flowchart of an air interface processing method shown according to an embodiment. The method may be performed by a base station. The method may include the following steps 501-502.

At step 501, a notification message reported by a terminal is received.

In an embodiment of the present disclosure, the notification message is for notifying the base station that the terminal performs air interface processing based on the AI manner.

In a possible implementation, the terminal may report the notification message to the base station with first RRC signaling.

The first RRC signaling may multiplex RRC signaling in a related protocol, or the first RRC signaling is dedicated RRC signaling for reporting the notification message, which is not limited in the present disclosure.

In another possible implementation, the terminal may report the notification message to the base station with a first MAC CE.

The first MAC CE may be a dedicated MAC CE for reporting the notification message.

In a possible implementation, the air interface processing includes but is not limited to at least one of: CSI feedback or beam management.

At step 502, in response to determining that the terminal meets a backoff condition, a backoff configuration instruction is sent to the terminal.

In the embodiment of the present disclosure, the backoff condition indicates a condition for the terminal performing air interface processing manner backoff, and the backoff configuration instruction is for instructing the terminal to perform the air interface processing manner backoff.

In a possible implementation, the base station may send the backoff configuration instruction to the terminal with second RRC signaling.

The second RRC signaling may multiplex RRC signaling in a related protocol, or the second RRC signaling is dedicated RRC signaling for sending the backoff configuration instruction, which is not limited in the present disclosure.

In another possible implementation, the base station may send the backoff configuration instruction to the terminal with a second MAC CE.

The second MAC CE may be a dedicated MAC CE for sending the backoff configuration instruction.

In the embodiment of the present disclosure, the base station may detect whether the terminal meets the backoff condition, and if the base station determines that the terminal meets the backoff condition, the base station sends a backoff configuration instruction to the terminal, and the terminal directly backs off to the non-AI manner to perform the air interface processing based on the backoff configuration instruction. The non-AI manner may be an air interface processing manner, not related to the AI manner, agreed by a protocol in the related technology.

If the base station determines that the terminal does not meet the backoff condition, the base station does not need to send the backoff configuration instruction to the terminal, and the terminal does not receive the backoff configuration instruction and continues to perform the air interface processing based on the AI manner.

In the above embodiment, in the case of determining that the terminal meets the backoff condition, the base station may send a backoff configuration instruction to the terminal, to instruct the terminal to back off to the non-AI manner to perform the air interface processing, which improves flexibility of switching air interface processing manners.

In some optional embodiments, referring to FIG. 6, FIG. 6 is a flowchart of an air interface processing method shown according to an embodiment. The method may be performed by a base station. The method may include the following steps 601-602.

At step 601, a notification message reported by a terminal is received.

In an embodiment of the present disclosure, the notification message is for notifying the base station that the terminal performs air interface processing based on the AI manner.

In a possible implementation, the terminal may report the notification message to the base station with first RRC signaling.

The first RRC signaling may multiplex RRC signaling in a related protocol, or the first RRC signaling is dedicated RRC signaling for reporting the notification message, which is not limited in the present disclosure.

In another possible implementation, the terminal may report the notification message to the base station with a first MAC CE.

The first MAC CE may be a dedicated MAC CE for reporting the notification message.

In a possible implementation, the air interface processing includes but is not limited to at least one of: CSI feedback or beam management.

At step 602, configuration information is sent to the terminal for configuring a backoff condition.

The backoff condition indicates a condition for the terminal performing air interface processing manner backoff.

In a possible implementation, the base station may send the configuration information to the terminal with third RRC signaling.

The third RRC signaling may multiplex RRC signaling in a related protocol, or the third RRC signaling is dedicated RRC signaling for sending the configuration information, which is not limited in the present disclosure.

In another possible implementation, the base station may send the configuration information to the terminal with a third MAC CE.

The third MAC CE may be a dedicated MAC CE for sending the configuration information.

In the embodiment of the present disclosure, the base station may configure a backoff condition for the terminal, and the terminal determines whether to back off to the non-AI manner to perform the air interface processing based on the backoff condition.

In the above embodiment, the base station may configure a backoff condition for the terminal and send the backoff condition to the terminal with the configuration information, and the terminal detects whether the terminal meets the backoff condition, to determine whether to back off to the non-AI manner to perform the air interface processing, which improves the flexibility of switching the air interface processing manners.

In some optional embodiments, different air interface processing behaviours performed by the terminal based on the AI manner may correspond to different backoff conditions.

For example, CSI feedback performed by the terminal based on the AI manner corresponds to a first backoff condition, beam management performed by the terminal based on the AI manner corresponds to a second backoff condition, and the first backoff condition may be different from the second backoff condition.

In a possible implementation, the backoff condition may be at least one of:
performance parameter values, which indicate a performance of the terminal when performing different air interface processing behaviours based on the AI manner, are less than one or more preset thresholds; or
a duration, in which the performance parameter value is less than the preset threshold, reaches a preset duration.

In a possible implementation, different air interface processing behaviours performed by the terminal based on the AI manner may also correspond to different preset thresholds.

For example, the CSI feedback performed by the terminal based on the AI manner corresponds to a first preset threshold, and the beam management performed by the terminal based on the AI manner corresponds to a second preset threshold. The first preset threshold is different from the second preset threshold.

In a possible implementation, different air interface processing behaviours performed by the terminal based on the AI manner correspond to different performance parameters. The performance parameters may be any one of: an accuracy parameter or a bit error rate parameter.

For example, a performance parameter corresponding to the CSI feedback performed by the terminal based on the AI manner is the accuracy parameter, a performance parameter corresponding to the beam management performed by the terminal based on the AI manner is the bit error rate parameter, and vice versa.

The performance parameter may also be another parameter capable of indicating performance of the terminal performing the air interface processing behaviour based on the AI manner, which is not limited in the present disclosure.

Certainly, different air interface processing behaviours performed by the terminal based on the AI manner may also correspond to the same performance parameter, which is not limited in the present disclosure. For example, performance parameters corresponding to the CSI feedback and beam management performed by the terminal based on the AI manner are the accuracy parameter.

In another possible implementation, when different air interface processing behaviours performed by the terminal based on the AI manner correspond to the same performance parameter, the first preset threshold may also be the same as the second preset threshold, which is not limited in the present disclosure.

Corresponding to the above embodiments of application function implementation methods, the present disclosure further provides embodiments of application function implementation apparatuses.

Referring to FIG. 7, FIG. 7 is a block diagram of an air interface processing apparatus shown according to an exemplary embodiment. The apparatus is applied to a terminal and includes:
a reporting module 701, configured to report, in response to determining that the terminal performs air interface processing based on an artificial intelligence (AI) manner, a notification message to a base station, where the notification message is for notifying the base station that the terminal performs the air interface processing based on the AI manner.

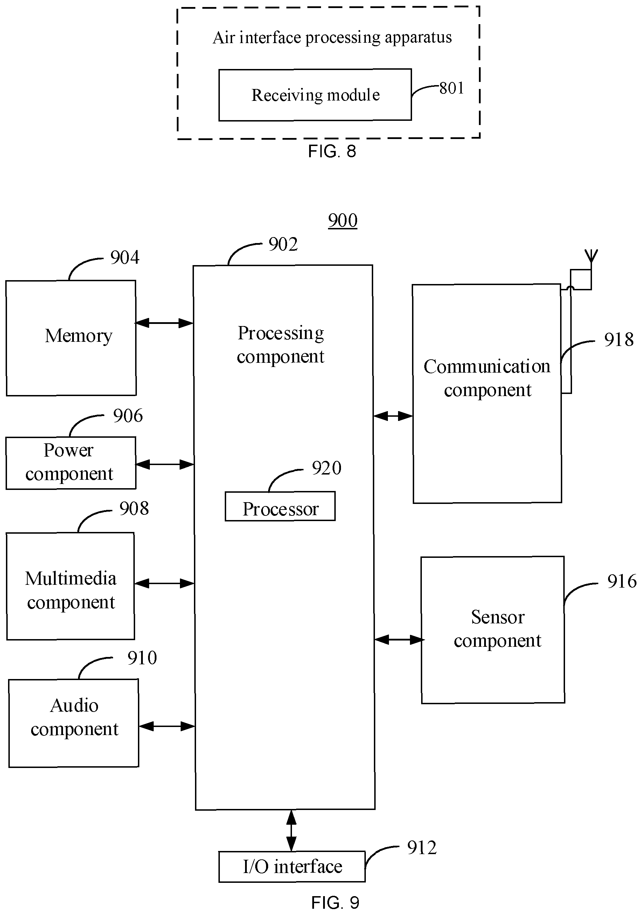

Referring to FIG. 8, FIG. 8 is a block diagram of an air interface processing apparatus shown according to an exemplary embodiment. The apparatus is applied to a base station and includes:
a receiving module 801, configured to receive a notification message reported by a terminal, where the notification message is for notifying the base station that the terminal performs air interface processing based on an artificial intelligence (AI) manner.

Since the embodiments of the apparatuses substantially corresponds to the embodiments of the methods, and the related contents may refer to the description of the embodiments of the methods. The embodiments of the apparatuses described above are only schematic. The units explained as separate components may be or may not be physically separated, and the components displayed as units may be or may not be physical units, that is, they may be located in one place or may be distributed across multiple network units. A part or all of modules may be selected according to actual needs to achieve the purpose of the solutions in the present disclosure. Those skilled in the art may understand and implement other embodiments without creative efforts.

Correspondingly, the present disclosure further provides a computer-readable storage medium. The computer-readable storage medium stores a computer program, and the computer program is configured to perform any one air interface processing method on the side of the terminal.

Correspondingly, the present disclosure further provides a computer-readable storage medium. The computer-readable storage medium stores a computer program, and the computer program is configured to perform any one air interface processing method on the side of the base station.

Correspondingly, the present disclosure further provides an air interface processing apparatus, including:
a processor; and
a memory, storing instructions executable by the processor;
where the processor is configured to perform any one air interface processing method on the side of the terminal.

FIG. 9 is a block diagram of an air interface processing apparatus 900 shown according to an exemplary embodiment. For example, the apparatus 900 may be a terminal, such as a mobile phone, a tablet computer, an e-book reader, a multimedia playing device, a wearable device, a vehicle-mounted user equipment, an ipad, a smart television, etc.

Referring to FIG. 9, the apparatus 900 may include one or more of the following components: a processing component 902, a memory 904, a power component 906, a multimedia component 908, an audio component 910, an input/output (I/O) interface 912, a sensor component 916, and a communication component 918.

The processing component 902 typically controls the overall operation of the apparatus 900, such as operations associated with display, phone calls, data random accesses, camera operations, and recording operations. The processing component 902 may include one or more processors 920 to execute instructions to complete all or part of the steps in the above air interface processing method. Additionally, the processing component 902 may include one or more modules to facilitate interaction between the processing component 902 and other components. For example, the processing component 902 may include a multimedia module to facilitate interaction between the multimedia component 908 and the processing component 902. For another example, the processing component 902 may read executable instructions from a memory, to implement steps of the air interface processing method provided in the above embodiments.

The memory 904 is configured to store various types of data to support operations of the apparatus 900. Examples of such data include instructions, contact data, phonebook data, messages, pictures, videos, etc., for any application program or method operating on the apparatus 900. The memory 904 may be realized by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 906 provides power to various components of the apparatus 900. The power component 906 may include a power supply management system, one or more power supplies, and other components that are associated with generating, managing, and distributing power for the apparatus 900.

The multimedia component 908 includes a display screen providing an output interface between the apparatus 900 and the user. In some embodiments, the multimedia component 908 includes a front facing camera and/or a rear facing camera. When the apparatus 900 is in an operation mode, such as a shooting mode or a video mode, the front facing camera and/or the rear facing camera may receive external multimedia data. Each of the front facing camera and rear facing camera may be a fixed optical lens system or has a focal length and an optical zoom capability.

The audio component 910 is configured to output and/or input audio signals. For example, the audio component 910 includes a microphone (MIC). The microphone is configured to receive external audio signals when the apparatus 900 is in the operating mode, such as a call mode, a recording mode, and a speech recognition mode. The received audio signals may be further stored in the memory 904 or sent via the communication component 918. In some embodiments, the audio component 910 also includes a speaker for outputting the audio signals.

The I/O interface 912 provides an interface between the processing component 902 and peripheral interface modules. The peripheral interface modules may be keyboards, click wheels, buttons, etc. These buttons may include but are not limited to: a home button, a volume button, a start button, and a lock button.

The sensor component 916 includes one or more sensors to provide various aspects of state assessment for the apparatus 900. For example, the sensor component 916 may detect an open/closed state of the apparatus 900, relative positioning of components that are for example a display and keypad of the apparatus 900. The sensor component 916 may also detect a position change of the apparatus 900 or of a component of the apparatus 900, presence or absence of the user contacting with the apparatus 900, an orientation or acceleration/deceleration of the apparatus 900, and a temperature change of the apparatus 900. The sensor component 916 may include a proximity sensor configured to detect the presence of nearby objects without any physical contact. The sensor component 916 may also include a light sensor, such as a CMOS or CCD image sensor, for use in an imaging application. In some embodiments, the sensor component 916 may also include an acceleration sensor, a gyroscope sensor, a magnetic sensor, a pressure sensor, or a temperature sensor.

The communication component 918 is configured to facilitate wired or wireless communication between the apparatus 900 and other devices. The apparatus 900 may access a wireless network based on a communication standard, such as Wi-Fi, 2G, 3G, 4G, 5G, 6G, or a combination of them. In an exemplary embodiment, the communication component 918 receives, via a broadcast channel, a broadcast signal or broadcast related information from an external broadcast management system. In an exemplary embodiment, the communication component 918 further includes a near-field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 900 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform any one air interface processing method on the side of the terminal.

In an exemplary embodiment, a non-transitory machine-readable storage medium including instructions is further provided, such as the memory 904 including the instructions. The above instructions may be executed by the processor 920 of the apparatus 900 to complete the above air interface processing method. For example, the non-transitory computer-readable storage medium may be an ROM, a random access memory (RAM), a CD-ROM, a magnetic tape, a floppy disk, an optical data storage device, etc.

Correspondingly, the present disclosure further provides an air interface processing apparatus, including:
a processor; and
a memory, storing instructions executable by the processor;
where the processor is configured to perform any one air interface processing method on the side of the base station.

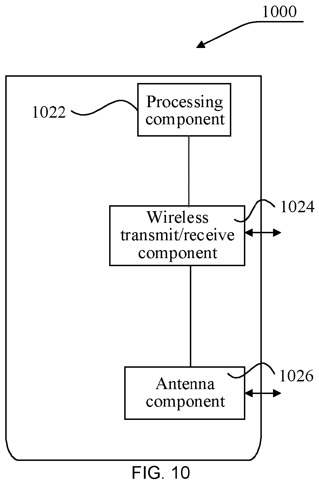

As shown in FIG. 10, FIG. 10 is a schematic structural diagram of an air interface processing apparatus 1000 shown according to an exemplary embodiment. The apparatus 1000 may be provided as the base station. Referring to FIG. 10, the apparatus 1000 includes a processing component 1022, a wireless transmit/receive component 1024, an antenna component 1026, and a signal processing part specific to a wireless interface. The processing component 1022 may further include at least one processor.

One processor of the processing component 1022 may be configured to perform any one air interface processing method on the side of the base station.

Those skilled in the art will easily come up with other implementation solutions of the present disclosure after considering the specification and practicing the present disclosure disclosed herein. The present disclosure aims to cover any variations, uses, or adaptive changes of the present disclosure, which follow general principles of the present disclosure and include common knowledge or customary technical means in the art not disclosed in the present disclosure. The specification and embodiments are only considered exemplary, and the true scope and spirit of the present disclosure are indicated by the following claims.

It should be understood that the present disclosure is not limited to the precise structure described above and shown in the accompanying drawings, and various modifications and changes may be made without departing from its scope. The scope of the present disclosure is limited only by the appended claims.

## Claims

1. An air interface processing method, performed by a terminal and comprising:
reporting, in response to determining that the terminal performs air interface processing based on an artificial intelligence, AI, manner, a notification message to a base station, wherein the notification message is for notifying the base station that the terminal performs the air interface processing based on the AI manner.

2. The method of claim 1, wherein the reporting a notification message to a base station, comprises any one of:
reporting the notification information to the base station with first radio resource control, RRC, signaling; or
reporting the notification information to the base station with a first medium access control element, MAC CE.

3. The method of claim 1, further comprising:
receiving a backoff configuration instruction sent by the base station when determining that the terminal meets a backoff condition, wherein the backoff condition indicates a condition for the terminal performing air interface processing manner backoff, and the backoff configuration instruction is for instructing the terminal to perform the air interface processing manner backoff; and
backing off, based on the backoff configuration instruction, to a non-AI manner to perform the air interface processing.

4. The method of claim 3, wherein the receiving a backoff configuration instruction sent by the base station when determining that the terminal meets a backoff condition, comprises any one of:
receiving the backoff configuration instruction sent by the base station with second RRC signaling when determining that the terminal meets the backoff condition; or
receiving the backoff configuration instruction sent by the base station with a second MAC CE when determining that the terminal meets the backoff condition.

5. The method of claim 1, further comprising:
receiving configuration information sent by the base station for configuring a backoff condition, wherein the backoff condition indicates a condition for the terminal performing air interface processing manner backoff; and
backing off, in response to determining that the terminal performs the air interface processing based on the AI manner and meets the backoff condition, to a non-AI manner to perform the air interface processing; and/or
performing, in response to determining that the terminal performs the air interface processing based on the AI manner and does not meet the backoff condition, the air interface processing based on the AI manner.

6. The method of claim 5, wherein the receiving configuration information sent by the base station for configuring a backoff condition, comprises any one of:
receiving the configuration information sent by the base station with third RRC signaling; or
receiving the configuration information sent by the base station with a third MAC CE.

7. The method of any one of claims 3 to 6, wherein different air interface processing behaviours performed by the terminal based on the AI manner correspond to different backoff conditions.

8. The method of claim 7, wherein the backoff condition comprises at least one of:
performance parameter values, which indicate a performance of the terminal when performing different air interface processing behaviours based on the AI manner, are less than one or more preset thresholds; or
a duration, in which the performance parameter value is less than the preset threshold, reaches a preset duration.

9. The method of claim 8, wherein the different air interface processing behaviours performed by the terminal based on the AI manner correspond to different preset thresholds.

10. The method of claim 8, wherein the different air interface processing behaviours performed by the terminal based on the AI manner correspond to different performance parameters.

11. The method of claim 10, wherein the performance parameters comprise any one of:
an accuracy parameter; or
a bit error rate parameter.

12. The method of any one of claims 1 to 6, wherein the air interface processing comprises at least one of:
channel state information, CSI, feedback; or
beam management.

13. An air interface processing method, performed by a base station and comprising:
receiving a notification message reported by a terminal, wherein the notification message is for notifying the base station that the terminal performs air interface processing based on an artificial intelligence, AI, manner.

14. The method of claim 13, wherein the receiving a notification message reported by a terminal, comprises any one of:
receiving the notification information reported by the terminal to the base station with first radio resource control, RRC, signaling; or
receiving the notification information reported by the terminal to the base station with a first medium access control element, MAC CE.

15. The method of claim 13, further comprising:
sending, in response to determining that the terminal meets a backoff condition, a backoff configuration instruction to the terminal, wherein the backoff condition indicates a condition for the terminal performing air interface processing manner backoff, and the backoff configuration instruction is for instructing the terminal to perform the air interface processing manner backoff.

16. The method of claim 15, wherein the sending a backoff configuration instruction to the terminal, comprises any one of:
sending the backoff configuration instruction to the terminal with second RRC signaling; or
sending the backoff configuration instruction to the terminal with a second MAC CE.

17. The method of claim 13, further comprising:
sending configuration information to the terminal for configuring a backoff condition, wherein the backoff condition indicates a condition for the terminal performing air interface processing manner backoff.

18. The method of claim 17, wherein the sending configuration information to the terminal for configuring a backoff condition, comprises any one of:
sending the configuration information to the terminal with third RRC signaling; or
sending the configuration information to the terminal with a third MAC CE.

19. The method of any one of claims 15 to 18, wherein different air interface processing behaviours performed by the terminal based on the AI manner correspond to different backoff conditions.

20. The method of claim 19, wherein the backoff condition comprises at least one of:
performance parameter values, which indicate a performance of the terminal when performing different air interface processing behaviours based on the AI manner, are less than one or more preset thresholds; or
a duration, in which the performance parameter value is less than the preset threshold, reaches a preset duration.

21. The method of claim 20, wherein the different air interface processing behaviours performed by the terminal based on the AI manner correspond to different preset thresholds.

22. The method of claim 20, wherein the different air interface processing behaviours performed by the terminal based on the AI manner correspond to different performance parameters.

23. The method of claim 22, wherein the performance parameters comprise any one of:
an accuracy parameter; or
a bit error rate parameter.

24. The method of any one of claims 13 to 18, wherein the air interface processing comprises at least one of:
channel state information, CSI, feedback; or
beam management.

25. An air interface processing apparatus, applied to a terminal and comprising:
a reporting module, configured to report, in response to determining that the terminal performs air interface processing based on an artificial intelligence, AI, manner, a notification message to a base station, wherein the notification message is for notifying the base station that the terminal performs the air interface processing based on the AI manner.

26. An air interface processing apparatus, applied to a base station and comprising:
a receiving module, configured to receive a notification message reported by a terminal, wherein the notification message is for notifying the base station that the terminal performs air interface processing based on an artificial intelligence, AI, manner.

27. A computer-readable storage medium, storing a computer program, wherein the computer program is configured to perform the air interface processing method of any one of claims 1 to 12.

28. A computer-readable storage medium, storing a computer program, wherein the computer program is configured to perform the air interface processing method of any one of claims 13 to 24.

29. An air interface processing apparatus, comprising:
a processor; and
a memory, storing instructions executable by the processor;
wherein the processor is configured to perform the air interface processing method of any one of claims 1 to 12.

30. An air interface processing apparatus, comprising:
a processor; and
a memory, storing instructions executable by the processor;
wherein the processor is configured to perform the air interface processing method of any one of claims 13 to 24.
